# EUROPÄISCHE PATENTSCHRIFT

(11) **EP 0 513 292 B1**
(45) Veröffentlichungstag und Bekanntmachung des Hinweises auf die Patenterteilung: **21.02.1996**
(21) Anmeldenummer: 91920879.3
(22) Anmeldetag: 29.11.1991
(51) Int. Cl.: F16L 33/207

(54) **ROHRVERBINDUNG, INSBESONDERE AN VERBUNDROHREN**
TUBE JOINT, IN PARTICULAR FOR COMPOSITE TUBES
RACCORD DE TUYAUX, NOTAMMENT DE TUYAUX COMPOSITE

(30) Priorität: 30.11.1990 DE 9016310 U
(43) Veröffentlichungstag der Anmeldung: 19.11.1992
(73) Patentinhaber: Hewing GmbH, D-48607 Ochtrup (DE)
(72) Erfinder: Olbrich, Kurt, D-6121 Mossautal 3 (DE)
(74) Vertreter: Busse & Busse Patentanwälte
(86) Internationale Anmeldenummer: EP9102261
(87) Internationale Veröffentlichungsnummer: WO9209840

(56) Entgegenhaltungen:
- DE-A- 1 450 408
- GB-A- 992 378
- GB-A- 2 220 242
- US-A- 2 535 460
- US-A- 3 539 207

## Beschreibung

Die Erfindung betrifft eine Rohrverbindung, insbesondere für Verbundrohre, nach dem Oberbegriff des Anspruchs 1, wie sie aus der US 1 825 005 bekannt ist. Eine solche bekannte Ausführung schafft allenfalls für gewebeverstärkte Gummischläuche, nicht jedoch für Kunststoff- oder Verbundrohre eine dauerhaft dichte Verbindung, da die Gestaltung des Anschlußbereiches der Stützhülse keine sichere Festlegung gewährleistet, die Temperaturschwankungen und Druckschwankungen in einem durchströmenden Medium gewachsen ist.

Bei einer weiteren bekannten Rohrverbindung (EP-B-0 159 997) werden die auf ihrem Anschlußbereich der Stützhülse befindlichen Rohrenden durch eine Zwischenhülse preßverformt, die ihrerseits durch einen Preßring bei dessen Aufschieben auf die Zwischenhülse in axialer und radialer Richtung verformt wird und auf die Wandung der Rohrenen starke axiale und radiale Preßdrücke ausübt. Eine derartige Ausführung, bei der das Material der Zwischenhülse den Zwischenraum zwischen Innenseite des Preßringes und Außenseite des preßverformten Rohrendes vollständig auszufüllen hat und dabei beidseitige Deformationen erfährt, werden hohe, die Struktur des Rohrwandmaterials beeinträchtigende und dessen Festigkeit und Dichtfunktion herabsetzende Drücke für die Montage der Rohrverbindung benötigt, deren Aufbringung auf Baustellen problematisch ist. Derartige Rohrverbindungen sind daher in der Montage aufwendig. Sie erfordern präzise hergestellte Zwischenhülsen und Preßringe und sind kaum in der Lage, normgemäß zulässige Toleranzen in den Rohrquerschnittsabmessungen auszugleichen. Die aufwendige Gestaltung der Rohrverbindung mit Zwischenhülse und Preßring je Rohrende vergrößert den Gesamtdurchmesser der Rohrverbindung erheblich.

Der Erfindung liegt die Aufgabe zugrunde, eine Rohrverbindung, insbesondere für Verbundrohre, zu schaffen, die mit einem geringen Bau- und Montageaufwand eine dauerhaft feste und dichte Verbindung von Rohren erbringt.

Die Erfindung löst diese Aufgabe durch eine Rohrverbindung mit den Merkmalen des Anspruchs 1. Hinsichtlich wesentlicher weiterer Ausgestaltungen wird auf die Ansprüche 2 bis 11 verwiesen.

Die Erfindung schafft eine Rohrverbindung mit einer verformbaren außenliegenden Preßhülse, die einem zwischen dieser Preßhülse und einem Anschlußbereich der Stützhülse befindlichen Rohrendbereich eine wellenförmige Umformung mit Zonen unterschiedlicher Verpressung vermittelt, dabei Kerbwirkungen vermeidet und eine schonende, strukturerhaltende, sicher abdichtende Festlegung des Rohrendes erbringt. Auf dem Aufnahmebereich der Stützhülse kann zumeist ein elastomerer Ringkörper vorgesehen sein, der als Halteelement für die Stützhülse, als Dichtring unmittelbar gegenüber einer Vertiefung und/oder Trenn- und Dichtelement zwischen dem Stirnende eines Verbundrohres und dem Bund der Stützhülse wirksam sein kann, in dessen Bereich der Außendurchmesser der Rohrverbindung gegenüber dem Außendurchmesser der Rohrenden nur unwesentlich vergrößert ist. Durch die schonende Umformung der Rohrendbereiche ist eine derartige Rohrverbindung besonders für Verbundrohre, insbesondere Aluminium/Kunststoff-Verbundrohre, einsetzbar, da keine Schäden durch Schneid-, Scheroder Kerbwirkungen im Preßbereich auftreten.

Hinsichtlich wesentlicher weiterer Vorteile und Einzelheiten der Erfindung wird auf die nachfolgende Beschreibung und die Zeichnung verwiesen, in der ein Ausführungsbeispiel des Gegenstands der Erfindung schematisch näher veranschaulicht ist. In der Zeichnung zeigen:
- Fig. 1: einen axialen Teilschnitt einer erfindungsgemäßen Rohrverbindung mit zwei Anschlußbereichen in einem unverpreßtem Zustand im Bereich A und einem verpreßtem Zustand im Bereich B,
- Fig. 2: eine Einzeldarstellung einer Stützhülse gemäß Fig. 1 mit vormontierten Ringkörpern,
- Fig. 3: eine vergrößerte Einzeldarstellung eines Anschlußbereiches der Stützhülse gemäß Fig. 2,
- Fig. 4: eine Einzeldarstellung der Stützhülse mit veränderten Hauptringwülsten,
- Fig. 5: eine Einzeldarstellung des Anschlußbereiches gemäß Fig. 4 für eine einseitige Rohrverbindung,
- Fig. 6 bis 8: jeweils Prinzipdarstellungen unterschiedlicher Verbindungsphasen der Rohrverbindung im Bereich des Bundes,
- Fig. 9: eine vergrößerte Ausschnittsdarstellung eines Vertiefungsbereiches im Bereich einer Aufnahmenut mit Ringkörper,
- Fig. 10 und 11: jeweils einen Querschnitt der Stützhülse im Bereich eines Innenstützteils mit Verdrehsicherungsformen und
- Fig. 12: eine vergrößerte Ausschnittsdarstellung der Verdrehsicherungsform nach Fig. 10.

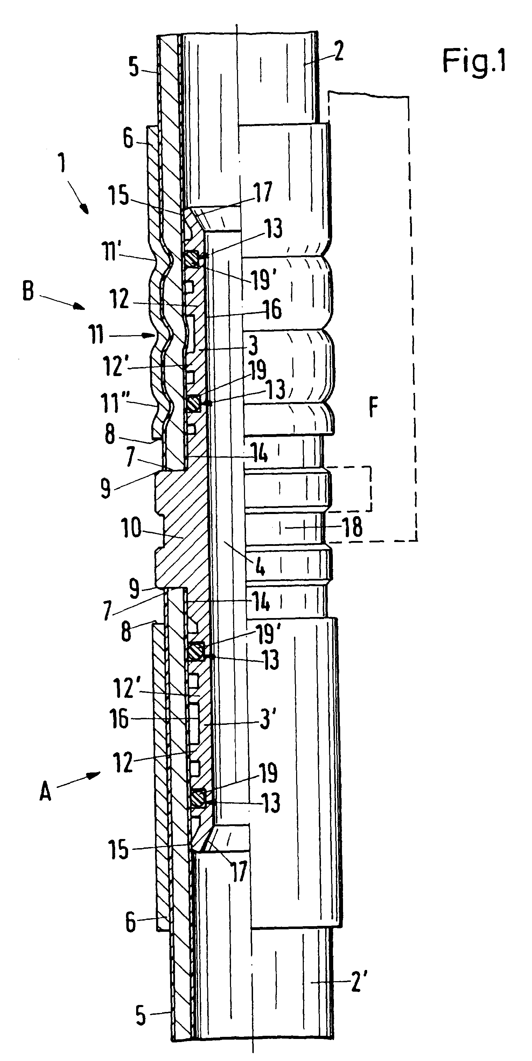

Die Fig. 1 zeigt eine als Ganzes mit 1 bezeichnete Rohrverbindung für zwei Verbundrohre 2,2'. Die Rohrverbindung 1 umfaßt eine Stützhülse 4 mit zwei Anschlußbereichen 3,3', auf der die Rohrenden der Verbundrohre 2,2' aufgebracht werden, die eine im unverformten Zustand A zylindrische äußere Mantelfläche 5 aufweisen. Die Enden der Verbundrohre 2,2' sind jeweils von einer Preßhülse 6,6' umgriffen, die in der im Zustand A veranschaulichten Einbaulage einen Zylinderkörper gleichbleibenden Durchmessers bildet. In dieser vormontierten Einbaulage sind die Stirnseiten 7 der Verbundrohre 2,2' bis zur Anlage an radial vorstehende Seitenwände 9 eines Bundes 10 der Stützhülse 4 vorgeschoben, und eine Stirnseite 8 der Preßhülse 6 kann zum Bund 10 beabstandet bleiben, ohne die Dichtigkeit zu beeinflussen.

Der verformte Zustand B in der Darstellung gemäß Fig. 1 verdeutlicht, daß die Rohrverbindung 1 ausgehend vom unverformten Zustand A der Einzelteile dadurch gebildet wird, daß die Preßhülsen 6, die als plastisch kalt umformbare Preßglieder ausgebildet sind, im Endzustand der Rohrverbindung 1 ringförmige Vertiefungsbereiche 11,11',11'' erhalten, die in zweckmäßiger Ausführung der Montage mittels eines formgebenden Preßwerkzeuges (nicht näher dargestellt) eingebracht werden. Diese kaltplastische Verformung ist bleibender Natur.

Als Preßwerkzeug kann dabei eine Preßzange mit Formbacken F Anwendung finden, die in zwei, drei oder vier um 90°, 120° oder 180° Zentriwinkel versetzten Angriffsstellungen geschlossen wird und dementsprechend eine gleichförmig runde Verformung gewährleistet. Das Preßwerkzeug wird dabei durch die Seitenwände 9 des Bundes 10 und das rohrseitige Ende 8 der Preßhülse 6 zentriert, wobei die Formbacken F mit entsprechenden Zentriernuten oder Zentriergabeln (nicht dargestellt) versehen sind.

Um eine abdichtende Festlegung der auf den Anschlußbereichen 3,3' der Stützhülse 4 befindlichen Rohrenden zu erreichen, sind diesen Vertiefungsbereiche 11,11',11'' Hauptringwülste 12,12' auf der Stützhülse 4 so zugeordnet, daß die auf den Anschlußbereichen 3 befindlichen Rohrenden eine wellenförmige Verformung zwischen der Stützhülse 4 und der Preßhülse 6 erhalten, wobei sie gleichzeitig an den einander zugewandten Flächen von Stütz- und Preßhülse 4,6 unter Druck anliegen.

In einer zweckmäßigen Ausführungsform sind drei Vertiefungsbereiche 11,11',11'' der jeweiligen Preßhülse 6 jeweils zwei Hauptringwülsten 12,12' auf dem zugehörigen Anschlußbereich 3,3' der Stützhülse 4 auf Lücke versetzt zugeordnet.

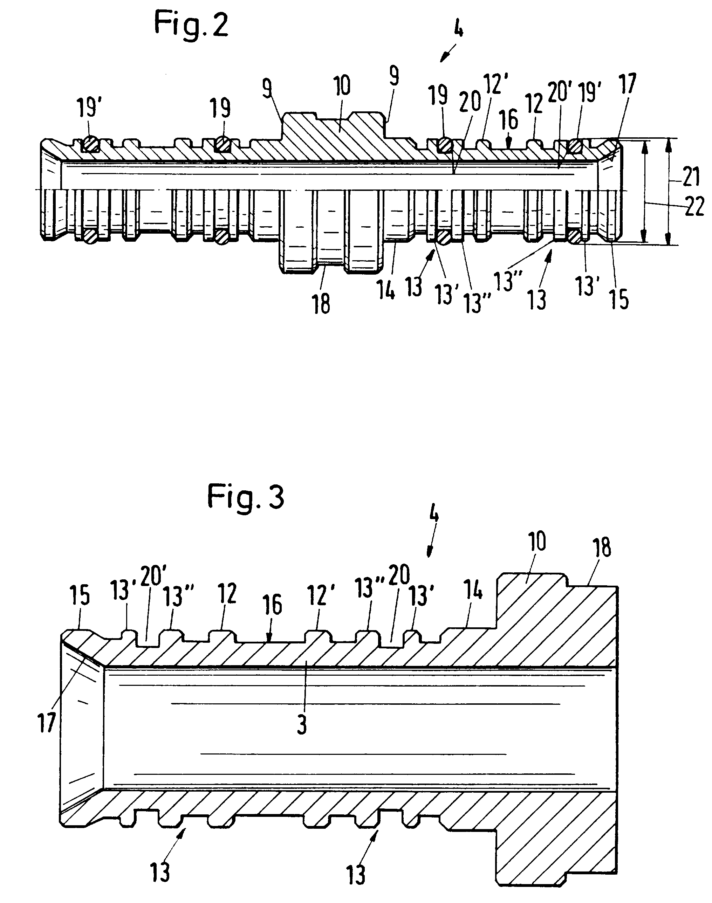

Zur weiteren Verbesserung der axialen Belastbarkeit der Rohrverbindung 1 sowie deren Dichtigkeit sind beidseits der Hauptringwülste 12,12' im Abstand nebengeordnete Zusatzringwülste 13 auf den Anschlußbereichen 3 der Stützhülse 4 vorgesehen. Diese Zusatzringwülste 13 begrenzen zwischen sich eine Nut 20 für einen elastomeren Ringkörper 19,19', und die Teilbereiche 13',13'' sind mit im wesentlichen gleichen, den Hauptringwülsten 12,12' entsprechenden radialen Abmessungen versehen (Fig. 3 bis Fig. 5).

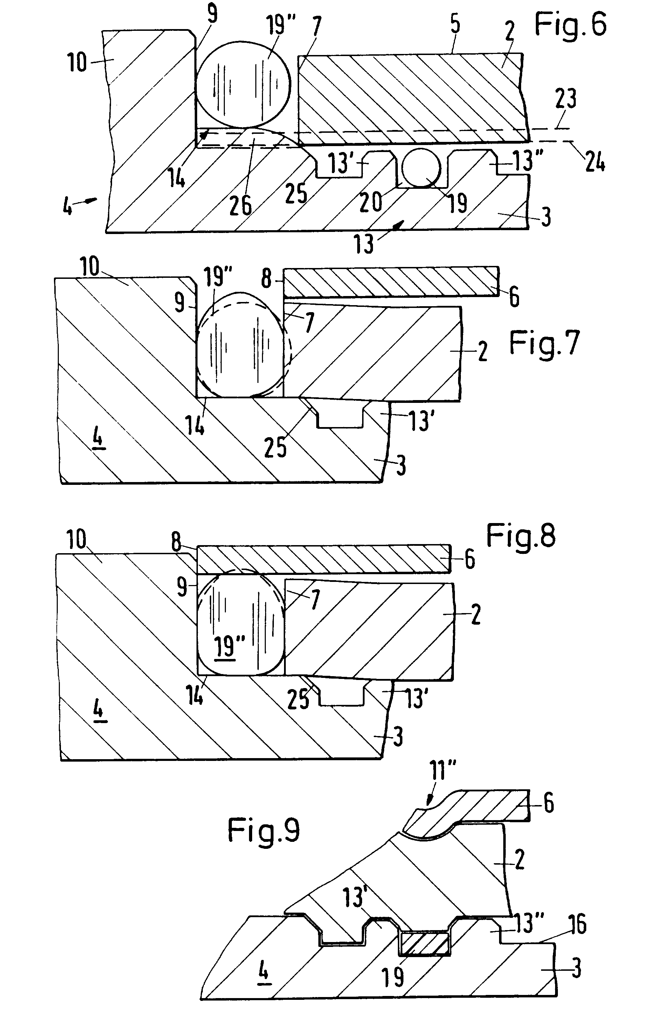

Dabei sind die Vertiefungsbereiche 11',11'' vorzugsweise radial fluchtend zu den Nuten 20,20' bzw. den in diesen befindlichen Ringkörpern 19,19' derart angeordnet, daß vermittels der Preßhülse 6 das Rohrmaterial eine in die Aufnahmenut 20 eingreifende Umformzone erhält, die mit dem elastischen Ringkörper 19,19' einen kriechfesten Dichtbereich bildet (Fig. 9), in dem auch im Rohrende befindliche Riefen eine Dichtung erfahren.

Um eine schonende wellenförmige Verformung der Rohrwandung herbeizuführen, ist der axiale Abstand zwischen den Hauptringwülsten 12,12' größer als deren Abstand zu den Zusatzringwülsten 13 ausgelegt (Fig. 2 bis 5). Der Abstand zwischen den Hauptringwülsten 12 beträgt dabei etwa 4,5 mm und der Abstand der Hauptringwülste 12 in axialer Richtung zu den Zusatzringwülsten 13 ist bei der dargestellten Rohrverbindung 1 für Verbundrohre 2 mit etwa 3 mm bemessen. Je nach Nenngröße der Rohre können de Abstände zwischen den Hauptringwülsten 12,12' jeweils 4 bis 15 mm und die Abstände zu den Zusatzringwülsten 13 jeweils 3 bis 12 mm betragen.

Die Teilbereiche 13',13'' der Zusatzringwülste 13 weisen zwischen sich die Nut 20,20' mit einer Tiefe von 0,6 bis 1,2 mm, vorzugsweise 0,9 mm, auf. Ein elastomerer Ringkörper 19,19' kann in der unverpreßten Ausgangsstellung mit axialem Spiel zwischen den beiden Teilbereichen 13',13'' angeordnet sein, so daß im verpreßten Zustand eine hinreichende Formausfüllung in der Nut 20,20' erreichbar ist. Die vorbeschriebenen Dimensionierungen finden bei Rohren mit abgeändertem Durchmesser entsprechende Abwandlung.

In Fig. 6 ist der elastomere Ringkörper 19 derart bemessen, daß dessen Querschnittsfläche die Querschnittsfläche der Nut 20 unterschreitet und im verpreßten Zustand (Fig. 9) der Ringkörper 19 elastisch verformt ist.

Auch bei Ausbildung der Ringkörper 19,19' mit einem Ringdurchmesser 21, der über dem Durchmesser 22 der Stützhülse 4 in vormontierter Einbaulage radial vorsteht (Fig. 2), kann die Stützhülse 4 in einer weiteren Vormontagephase in das Verbundrohr 2, z.B. von Hand, eingebracht werden. Dabei wirkt der Ringkörper 19,19' als Halteelement für die Stützhülse 4 insgesamt, so daß danach ohne zusätzliche Haltevorrichtung eine einfache Fertigstellung der Rohrverbindung 1 erreichbar ist (Fig. 6 bis 8).

Die jeweiligen Anschlußbereiche 3,3' der Stützhülse 4 umfassen in den verschiedenen Ausführungsformen gemäß Fig. 2 bis 5 einen an den Bund 10 angrenzenden zylindrischen Innenteil 14, einen zylindrischen Außenteil 15 gleichen Durchmessers und einen Zwischenteil 16, in dem die Ringwülste 12,12',13,13',13'' angeordnet sind.

Die Anschlußbereiche 3,3' weisen an ihren Außenenden innenseitig eine konische Aufweitung 17 auf, die im wesentlichen bis an die Außenfläche des Außenteils 15 des Anschlußbereiches 3,3' herangeführt ist, so daß ein strömungstechnisch günstiger Übergang zur Innenwandung 20 der Verbundrohre 2 gegeben ist.

Der Bund 10 der Stützhülse 4 kann in der sich aus Fig. 2 bis 4 ergebenden Weise als Zentrierschulter für das die Vertiefungsbereiche 11,11',11'' in den Preßhülsen 6 ausformende Preßwerkzeug ausgebildet sein. Dieser Bund 10 weist dabei mit seinen radial vorstehenden Seitenwänden 9 annähernd den gleichen Durchmesser wie die Preßhülsen 6 auf. Dabei kann der Bund 10 auch eine ausgeformte, umlaufende Zentriernut 18 aufweisen, deren Seitenwände 9 Zentierfunktion für die Formbacken F (Fig. 1) übernehmen können, die in diesem Falle mit einer in die Nut 18 eingreifenden Zentriergabel versehen sind.

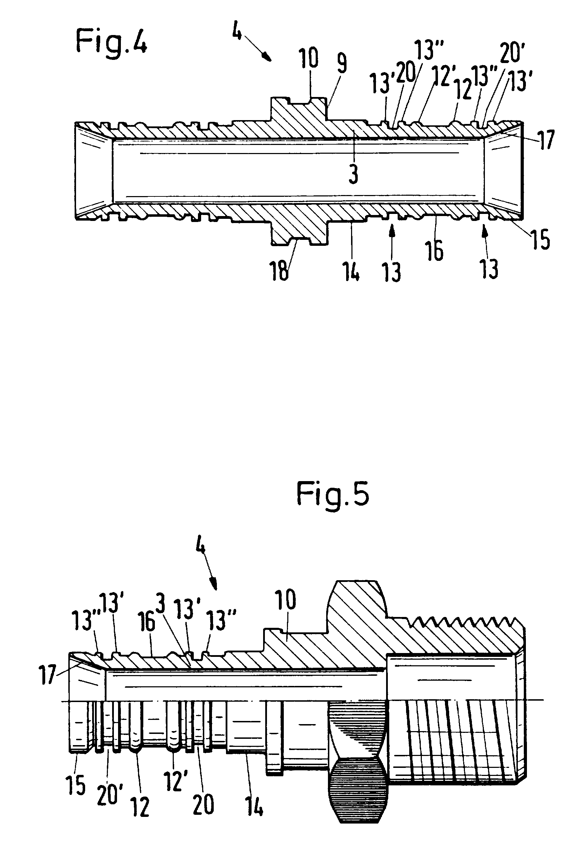

Die dargestellte Rohrverbindung 1 ist als Verbindung für koaxiale Rohrenden ausgebildet; sie kann jedoch die Grundform anderer Fittings wie T-, Winkel- oder Bogenstücke annehmen und auch mit nur einem Anschlußbereich 3 für ein Rohrende ausgerüstet sein (Fig. 3, Fig. 5).

Die vergrößerte Darstellung der Anschlußbereiche 3 verdeutlicht, daß die Begrenzungskanten aller Teile der Stützflächen 14,15 gebrochen ausgeführt sind (Fig. 3) und die Hauptringwülste 12,12' sowohl mit einer rechteckigen Querschnittsform (Fig. 3) als auch mit einer kreisbogenförmigen Umfangsfläche (Fig. 4, Fig. 5) ausgebildet sein können.

In der Darstellung gemäß Fig. 6 ist die Stützhülse 4 nahezu vollständig mit ihrem Anschlußbereich 3 in das Verbundrohr 2 eingebracht, so daß die Stirnseite 7 bis an das Innenstützteil 14 vorgeschoben ist. Mit Linien 23,24 ist dabei ein möglicher Toleranzbereich des Innendurchmessers des Verbundrohres 2 angedeutet, der mittels der Stützhülse 4 bei der Vormontage auszugleichen ist, um vor der Ausführung der Verpressung eine exakte Positionierung der Stützhülse 4 und der Preßhülse 6 zu erreichen (Fig. 7, Fig. 8).

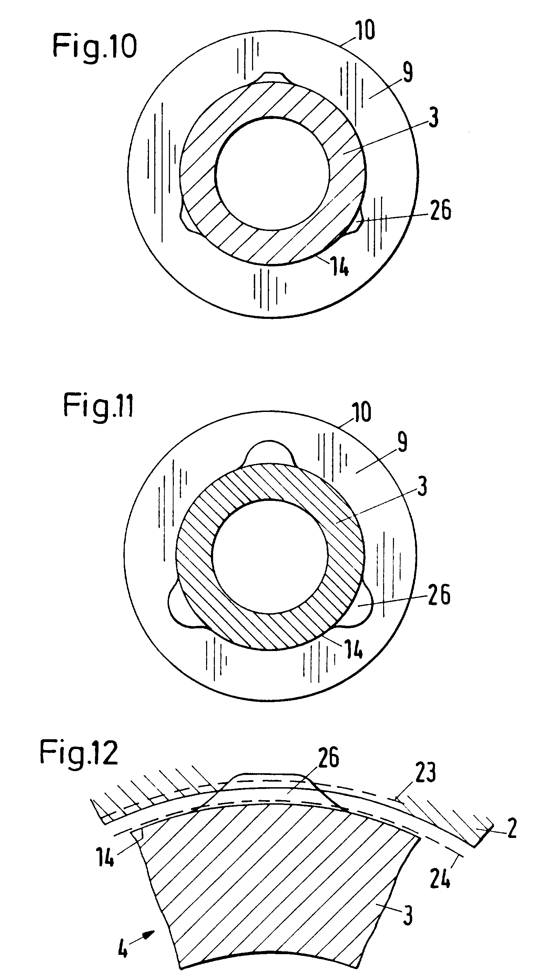

In Fig. 10 bis 12 ist der Innenstützteil 14 im Querschnitt dargestellt. Auf der Umfangsfläche des Innenstützteils 14 sind dabei mehrere Haltenocken 26 vorgesehen, die mit unterschiedlichem Querschnittsprofil ausgebildet sein können (Fig. 10, Fig. 11). Die vergrößerte Einzeldarstellung gemäß Fig. 12 veranschaulicht in Verbindung mit Fig. 6, daß mittels der Haltenocken 26 das Verbundrohr 2 in dem durch die Linien 23,24 angedeuteten Toleranzbereich in eine hinreichend stabile Vormontagestellung gebracht werden kann, so daß nach dem Positionieren der Preßhülse,6 (Fig. 8) die Rohrverbindung 1 insgesamt hergestellt werden kann. Danach bewirken die Haltenocken 26 eine vorteilhafte Verdrehsicherung für die Rohrverbindung 1.

In Fig. 6 bis 8 ist zwischen dem Bund 10 und der Stirnfläche 7 des Verbundrohres 2 ein elastomerer Ringkörper 19'' angeordnet, mit dem die Dichtungseigenschaften der Rohrverbindung 1 weiter verbessert sind. Bei der Verpressung mehrschichtiger Verbundrohre, insbesondere von Aluminium/Kunststoff-Verbundrohren ist mit dem Ringkörper 19'' ein Trennelement gebildet, mit dem der galvanische Kontakt zwischen unterschiedlichen Metallen im Bereich der Rohrverbindung 1 derart unterbunden werden kann, daß Korrosionserscheinungen zuverlässig vermieden sind.

## Patentansprüche

1. Rohrverbindung, insbesondere für Verbundrohre (2), mit einer Stützhülse (4) mit zumindest einem Anschlußbereich (3) und einer jedem Anschlußbereich (3) zugeordneten Preßhülse (6), wobei die Stützhülse (4) mit einem Bund (10) und mit auf jedem Anschlußbereich (3) im Abstand zueinander angeordneten Hauptringwülsten (12) versehen ist und die Preßhülse (6) in ihrer dem Bund (10) benachbarten Stellung ein auf dem Anschlußbereich (3) befindliches Rohrende (2) umgreift, und wobei die Preßhülse (6) jeweils als plastisch verformtes, (zylindrisches) Preßglied ausgebildet ist, das ringförmige, einwärts gerichtete Vertiefungsbereiche (11,11',11") aufweist, die zu den Hauptringwülsten (12) der Stützhülse (4) axial versetzt sind und eine abdichtende Festlegung des Rohrendes (2) unter wellenförmiger Verformung dessen Rohrwandung zwischen Stützhülse (4) und Preßhülse (6) erbringen, **dadurch gekennzeichnet**, daß der Anschlußbereich (3) der Stützhülse (4) eine Ausgangsstützfläche darbietet, die von einem an den Bund (10) angrenzenden zylindrischen Innenstützteil (14), einem dem Ende des Anschlußbereiches (3) benachbarten, zylindrischen Außenstützteil (15) gleichen Durchmessers und den Umfangsflächen der zwischen den Stützteilen (14,15) angeordneten Ringwülste definiert ist, ein Zwischenteil (16) verringerten Durchmessers vorgesehen ist, in dessen Zentralbereich zwei Hauptringwülste (12,12') und zwischen diesen und dem Innen- bzw. dem Außenstützteil (14,15) jeweils ein Zusatzringwulst (13) vorgesehen ist, wobei die Zusatzringwülste (13) jeweils eine Nut (20,20') aufweis en, deren Boden einen geringeren Durchmesser als der Zwischenteil (16) im Bereich zwischen den Hauptringwülsten (12) hat, wobei die Vertiefungsbereiche (11,11',11'') der Preßhülse (6) den Nuten (20,20') in den Zusatzringwülsten (13) und dem Bereich zwischen den Hauptringwülsten (12) radial fluchtend gegenüberliegen, und wobei der axiale Abstand zwischen den Hauptringwülsten (12) größer ist als der Abstand der Hauptringwülste (12) zu den benachbarten Zusatzringwülsten (13).

2. Rohrverbindung nach Anspruch 1, **dadurch gekennzeichnet,** daß auf dem Anschlußbereich (3) der Stützhülse (4) zumindest ein elastomerer Ringkörper (19,19',19") als Halteelement für die Stützhülse, als Dichtring unmittelbar gegenüber einer Vertiefung und/oder als Trenn- und Dichtelement zwischen dem Stirnende eines Verbundrohres und dem Bund der Stützhülse angeordnet ist.

3. Rohrverbindung nach Anspruch 1, **dadurch gekennzeichnet,** daß die Hauptringwülste (12) eine rechteckige Querschnittsform aufweisen.

4. Rohrverbindung nach einem der Ansprüche 1 bis 3, **dadurch gekennzeichnet,** daß die Begrenzungskanten der Stützflächen aller Teile des Anschlußbereiches (3) gebrochen ausgeführt sind.

5. Rohrverbindung nach Anspruch 1 oder 2, **dadurch gekennzeichnet,** daß die Hauptringwülste (12) im axialen Schnitt kreisbogenförmige Umfangsflächen aufweisen.

6. Rohrverbindung nach einem der Ansprüche 1 bis 5, **dadurch gekennzeichnet,** daß die Anschlußbereiche (3) an ihren Außenenden innenseitig eine konische Aufweitung (17) aufweisen, die an eine radial ausgerichtete Stirnfläche herangeführt ist, welche über eine konische Anschrägung in den Außenstützteil (15) übergeht.

7. Rohrverbindung nach einem der Ansprüche 1 bis 6, **dadurch gekennzeichnet,** daß dem Innenstützteil (14) der Stützhülse (4) eine konische Auflauffläche vorgeordnet ist.

8. Rohrverbindung nach einem der Ansprüche 1 bis 7, **dadurch gekenn****zeichnet,** daß der Bund (10) der Stützhülse (4) Zentrierschultern (9,18) für ein die Vertiefungsbereiche (11,11',11'') in den Preßhülsen (6) ausformendes Preßwerkzeug darbietet.

9. Rohrverbindung nach Anspruch 8, **dadurch gekennzeichnet,** daß die Zentrierschultern von über die Preßhülsen (6) radial vorstehenden Seitenwänden (9) des Bundes (10) gebildet sind.

10. Rohrverbindung nach Anspruch 8, **dadurch gekennzeichnet,** daß die Zentrierschultern von den Seitenwänden einer im Bund (10) ausgeformten Zentriernut (18) gebildet sind.

11. Rohrverbindung nach einem der Ansprüche 1 bis 10, **dadurch gekennzeichnet,** daß der Innenstützteil (14) der Stützhülse (4) Bereiche (26) mit einer größeren radialen Abmessung aufweist.

## Claims

1. A tube joint, particularly for composite tubes (2), with a supporting sleeve (4) with at least one connecting zone (3) and a compression sleeve (6) associated with each connection zone (3), the supporting sleeve (4) being provided with a collar (10) and with main annular beads (12) disposed at a distance from one another on each connection zone (3), the compression sleeve (6), in its position adjacent the collar (12), engaging around a tube end (2) which is disposed on the connection zone (3), the compression sleeve (6) being in each case constructed as a plastically shaped (cylindrical) compression member having annular inwardly directed depression zones (11, 11', 11'') which are axially offset in relation to the main annular beads (12) on the supporting sleeve (4) and provide for a sealing-tight fixing of the tube end (2) accompanied by an undulating deformation of its tubular walls between supporting sleeve (4) and compression sleeve (6), characterised in that the connection zone (3) of the supporting sleeve (4) offers an initial supporting surface which is defined by, adjacent the collar (10), a cylindrical inner supporting part (14), a cylindrical outer supporting part (15) of the same diameter adjacent the end of the connecting zone (3) and the peripheral surfaces of the annular bead disposed between the supporting parts (14, 15), and in that an intermediate part (16)of reduced diameter is provided in the central area of which there are two main annular beads (12, 12') and between these and the inner and respectively outwardly supporting part (14, 15) there is in each case an auxiliary annular bead (13), the auxiliary annular bead (13) having in each case a groove (20, 20') the bottom of which has a smaller diameter than the intermediate part (16) in the area between the main annular beads (12), the depression zones (11, 11', 11'') of the compression sleeve (6) being radially aligned with and opposite the grooves (20, 20') in the auxiliary annular beads (13) and the area between the main annular beads (12), and whereby the axial distance between the main annular beads (12) is greater than the gap between the main annular bead (12) and the adjacent auxiliary annular beads (13).

2. A tube joint according to claim 1, characterised in that on the connection zone (3) of the supporting sleeve (4) there is at least one elastomeric annular member (19, 19', 19") to serve as an element for holding the supporting sleeve, as a gasket directly opposite a depression and/or as a separating and sealing element between the end face of a composite tube and the shoulder on the supporting sleeve.

3. A tube joint according to claim 1, characterised in that the main ring beads (12) have a rectangular cross-sectional form.

4. A tube joint according to one of claims 1 to 3, characterised in that the defining edges of the supporting surfaces of all parts of the connection zone (3) are of broken construction.

5. A tube joint according to claim 1 or 2, characterised in that in cross-section, the main annular bead (12) has arcuate peripheral surfaces.

6. A tube joint according to one of claims 1 to 5, characterised in that the connection zones (3) have on their outer ends and on the inside a conical widening (17) which extends as far as a radially aligned end face which merges into the outer supporting part (15) via a conical chamfer.

7. A tube joint according to one of claims 1 to 6, characterised in that a conical run-on surface precedes the inner supporting part (14) of the supporting sleeve (4).

8. A tube joint according to one of claims 1 to 7, characterised in that the collar (10) on the supporting sleeve (4) has centring shoulders (9, 18) for a pressing tool which shapes the depression zones (11, 11', 11'') in the compression sleeves (6).

9. A tube joint according to claim 8, characterised in that the centring shoulders are formed by side walls (9) of the collar (10) which project radially over the compression sleeves (6).

10. A tube joint according to claim 8, characterised in that the centring shoulders are formed by the side walls of a centring groove (18) formed in the collar (10).

11. A tube joint according to one of claims 1 to 10, characterised in that the inner supporting part (14) of the supporting sleeve (4) has zones (26) of a larger radial dimension.

## Revendications

1. Raccord de tuyaux, notamment pour tuyaux composites (2), comprenant une douille d'appui (4) avec au moins une région de raccordement (3) et une douille de compression (6) associée à chaque région de raccordement (3), étant entendu que la douille d'appui (4) est pourvue d'un collet (10) et de bagues principales (12) espacées les unes des autres sur chaque région de raccordement (3) et que la douille de compression (6) enserre, dans sa position voisine du collet (10), une extrémité de tuyau (2) se trouvant sur la région de raccordement (3), et étant entendu que chaque douille de compression (6) est conçue comme un élément de compression (cylindrique), déformé plastiquement, qui présente des régions en creux (11, 11', 11'') annulaires, dirigées vers l'intérieur, qui sont décalées axialement par rapport aux bagues principales (12) de la douille d'appui (4) et assurent une fixation étanche de l'extrémité de tuyau (2) sous l'effet de la déformation ondulée de la paroi du tuyau entre la douille d'appui (4) et la douille de compression (6), caractérisé en ce que la région de raccordement (3) de la douille d'appui (4) offre une surface d'appui initiale, qui est définie par une partie d'appui intérieure (14) cylindrique contiguë au collet (10), une partie d'appui extérieure (15) cylindrique de même diamètre voisine de l'extrémité de la région de raccordement (3), et les surfaces périphériques des bagues disposées entre les parties d'appui (14, 15), une partie intermédiaire (16) de diamètre réduit est prévue, dans la région centrale de laquelle sont prévues deux bagues principales (12, 12') et entre celles-ci et les parties d'appui intérieure et extérieure (14, 15) est prévue à chaque fois une bague secondaire (13), sachant que les bagues secondaires (13) présentent chacune une gorge (20, 20'), dont le fond a un diamètre inférieur à celui de la partie intermédiaire (16) dans la région située entre les bagues principales (12), que les régions en creux (11, 11', 11'') de la douille de compression (6) font face, en alignement radial, aux gorges (20, 20') des bagues secondaires (13) et à la région située entre les bagues principales (12), et que la distance axiale entre les bagues principales (12) est supérieure à la distance entre les bagues principales (12) et les bagues secondaires (13) voisines.

2. Raccord de tuyaux suivant la revendication 1, caractérisé en ce que sur la région de raccordement (3) de la douille d'appui (4), au moins un corps torique en élastomère (19, 19', 19'') est disposé en tant qu'élément de retenue pour la douille d'appui, en tant que joint d'étanchéité juste en face d'un creux et/ou en tant qu'élément de séparation et d'étanchéité entre l'extrémité d'about d'un tuyau composite et le collet de la douille d'appui.

3. Raccord de tuyaux suivant la revendication 1, caractérisé en ce que les bagues principales (12) présentent une forme en coupe transversale rectangulaire.

4. Raccord de tuyaux suivant l'une quelconque des revendications 1 à 3, caractérisé en ce que les arêtes de délimitation des surfaces d'appui de toutes les parties de la région de raccordement (3) sont cassées.

5. Raccord de tuyaux suivant la revendication 1 ou 2, caractérisé en ce que les bagues principales (12) présentent en coupe axiale des surfaces périphériques en arc de cercle.

6. Raccord de tuyaux suivant l'une quelconque des revendications 1 à 5, caractérisé en ce que les régions de raccordement (3) présentent, à leurs extrémités extérieures, un évasement conique intérieur (17) qui est amené à une face d'about radiale qui, par l'intermédiaire d'un chanfrein conique, se fond dans la partie d'appui extérieure (15).

7. Raccord de tuyaux suivant l'une quelconque des revendications 1 à 6, caractérisé en ce qu'une surface inclinée conique précède la partie d'appui intérieure (14) de la douille d'appui (4).

8. Raccord de tuyaux suivant l'une quelconque des revendications 1 à 7, caractérisé en ce que le collet (10) de la douille d'appui (4) présente des épaulements de centrage (9, 18) pour un outil de compression formant les régions en creux (11, 11', 11'') dans les douilles de compression (6).

9. Raccord de tuyaux suivant la revendication 8, caractérisé en ce que les épaulements de centrage sont formés par des parois latérales (9) du collet (10) s'étendant radialement au-delà des douilles de compression (6).

10. Raccord de tuyaux suivant la revendication 8, caractérisé en ce que les épaulements de centrage sont formés par les parois latérales d'une gorge de centrage (18) ménagée dans le collet (10).

11. Raccord de tuyaux suivant l'une quelconque des revendications 1 à 10, caractérisé en ce que la partie d'appui intérieure (14) de la douille d'appui (4) présente des régions (26) d'une dimension radiale supérieure.
